Europäisches Patentamt

European Patent Office

Office européen des brevets

(19)

(11) Veröffentlichungsnummer: **0 047 821**
**B1**

# (12) EUROPÄISCHE PATENTSCHRIFT

(45) Veröffentlichungstag der Patentschrift:
28.03.84

(21) Anmeldenummer: 81105130.9

(22) Anmeldetag: 02.07.81

(51) Int. Cl.³: **G 01 C 22/00**, G 06 M 3/02,
G 06 M 1/24

(54) **Wegstreckenzähler.**

(30) Priorität: 13.09.80 DE 3034587

(43) Veröffentlichungstag der Anmeldung:
24.03.82 Patentblatt 82/12

(45) Bekanntmachung des Hinweises auf die Patenterteilung:
28.03.84 Patentblatt 84/13

(84) Benannte Vertragsstaaten:
DE FR GB SE

(56) Entgegenhaltungen:
US - A - 1 948 427
US - A - 2 493 437
US - A - 3 965 847

(73) Patentinhaber: VDO Adolf Schindling AG,
Gräfstrasse 103, D-6000 Frankfurt/Main (DE)

(72) Erfinder: Gonzalez, Manuel Lopez, Bremerstrasse 7,
D-6236 Eschborn (DE)
Erfinder: Klomann, Karlheln, Mühlwiesenstrasse 9,
D-6000 Frankfurt/Main 90 (DE)
Erfinder: Weigl, Rainer, Pfingstbornstrasse 51,
D-6200 Wiesbaden (DE)

(74) Vertreter: Könekamp, Herbert, Dipl.-Ing., Sodener
Strasse 9, D-6231 Schwalbach (DE)

ACTORUM AG

Wegstreckenzähler

Die Erfindung bezieht sich auf einen Wegstreckenzähler mit einer Zählerachse, auf der nebeneinander Zahlenrollen drehbar gelagert sind, die auf ihrem zylindrischen Umfang gleichmässig verteilt mit den Ziffern 0-9 beschriftet sind, wobei eine Reihe der nebeneinanderliegenden Ziffern in einem Sichtfenster sichtbar ist, mit einem Antrieb der Zahlenrollen, durch den in der Reihenfolge von rechts nach links bei Beendigung einer Umdrehung einer Zahlenrolle die danebenliegende Zahlenrolle um eine 9/10-Umdrehung gedreht wird und mit einer durch eine ausgewählte Zahlenrolle bei Erreichen einer bestimmten Anzeigeposition betätigbaren Anzeigeeinrichtung mit einer Anzeigefahne, die mit der ausgewählten Zahlenrolle zusammengekuppelt und bei Erreichen der bestimmten Anzeigeposition in den Bereich des Sichtfensters bewegbar, von der ausgewählten Zahlenrolle abkuppelbar und in dieser Position arretierbar ist.

Aus der US-A Nr. 4160900 ist ein derartiger Wegstreckenzähler bekannt, der, um das Erreichen einer bestimmten zurückgelegten Wegstrecke durch eine besondere Anzeigeeinrichtung anzuzeigen, an seiner äusseren linken Zahlenrolle einen axial hervorstehenden Zapfen besitzt. Bei Verdrehen der Zahlenrolle in einem bestimmten Bereich schlägt dieser Zapfen an dem einen Arm eines zweiarmigen Hebels an und verschwenkt diesen. Dadurch greift der andere Arm unterbrechend in ein Magnetfeld ein, so dass die von dem Magnetfeld beaufschlagte Anzeigeeinrichtung ein- bzw. ausgeschaltet wird.

Dieser bekannte Wegstreckenzähler hat einen sehr aufwendigen aus hochwertigen und teuren Bauteilen bestehenden Aufbau, der darüber hinaus auch noch einen relativ grossen Einbauraum benötigt.

Ein Wegstreckenzähler mit ebenfalls einem axial von der äusseren linken Zahlenrolle hervorstehenden Zapfen zum Verstellen einer Anzeigefahne ist aus der US-A Nr. 1948427 bekannt. Der Kuppelbzw. Entkuppelmechanismus weist dabei einen bauteilaufwendigen Aufbau auf.

Ein weiterer Wegstreckenzähler der eingangs genannten Art ist aus der US-A Nr. 2493437 bekannt. Er besitzt eine federnd die äusserste linke Zahlenrolle umgreifende Klammer, an der die Anzeigefahne befestigt ist. Durch die Erschütterungen während des Fahrbetriebs kann die Klammer sich aus ihrer Einstellposition wegbewegen, so dass ihre Anzeige im Sichtfenster nicht mehr dem gewünschten Zeitpunkt entspricht.

Aufgabe der Erfindung ist es, einen Wegstreckenzähler zu schaffen, der bei hoher Betriebssicherheit einen einfachen Aufbau besitzt und nur einen geringen Einbauraum erfordert.

Diese Aufgabe wird erfindungsgemäss durch den Gegenstand des Anspruchs 1 gelöst.

Auf aufwendige, einen grossen Einbauraum erfordernde Einrichtungen kann verzichtet werden und mit einfachen Mitteln kann eine Anzeige des Erreichens einer bestimmten zurückgelegten Wegstrecke erfolgen.

Diese Vorteile gelten insbesondere, wenn der Federarm drehbar auf der Zählerachse gelagert und mit zwei von der Zählerachse radial wegragenden Armen ausgebildet ist, wobei an dem freien Ende des einen Armes die Anzeigefahne angeordnet ist und das freie Ende des anderen Armes in die Ausnehmung der ausgewählten Zahlenrolle hineinragt.

Vorzugsweise besitzt das in die Ausnehmung der Zahlenrolle hineinragende Ende des Armes eine axial gerichtete Abbiegung, die bei vorgespanntem Federarm in die Ausnehmung der Zahlenrolle und bei entspanntem Federarm in eine axiale Ausnehmung der Wand hineinragt, wobei es günstig ist, wenn die Abbiegung U-förmig ist. Durch diese Abbiegung hat der Federarm eine axiale Erstreckung, die ein sicheres Eingreifen in die Ausnehmung in der ausgewählten Zahlenrolle bzw. in der Wand gewährleistet.

Die Anzeigefahne kann durch das abgewinkelte axial in den Bereich des Sichtfensters ragende freie Ende des Armes gebildet sein. Dabei kann die Anzeigefahne noch eine Farbbeschichtung aufweisen, so dass sie den Beobachter sicher auf den anzuzeigenden Zustand aufmerksam macht.

Ist die Anzeigefahne der linken äusseren Zahlenrolle zugeordnet, die im allgemeinen die Zehntausender Kilometer anzeigt, so kann damit angezeigt werden, dass hunderttausend Kilometer überschritten wurden.

Ein Ausführungsbeispiel der Erfindung ist in der Zeichnung dargestellt und wird im folgenden näher beschrieben. Es zeigen:

Fig. 1 eine Zahlenrolle eines erfindungsgemässen Wegstreckenzählers im Schnitt;

Fig. 2 eine perspektivische Ansicht von auf einer Zählerachse angeordneten Zahlenrolle;

Fig. 3 eine Ansicht der Anzeigefahne aus Fig. 1 ;

Fig. 4 die Anzeigefahne nach Fig. 3 in der Seitenansicht.

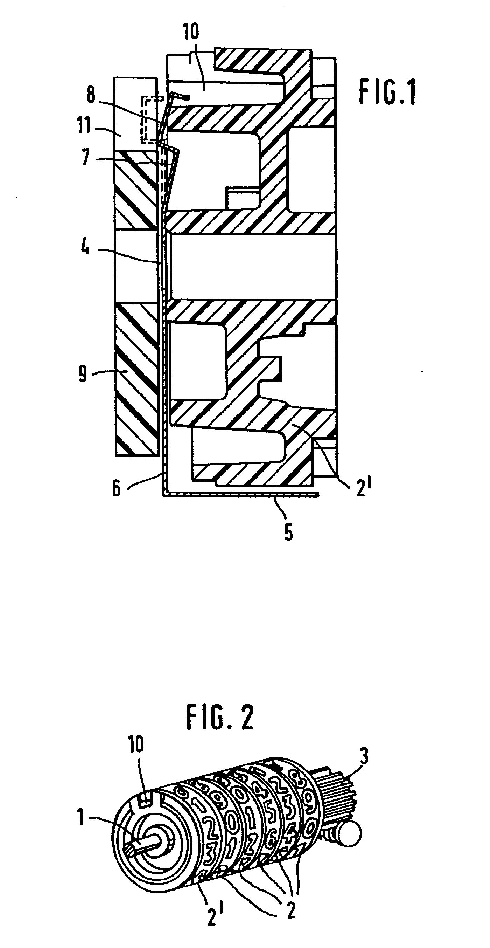

Der in den Figuren, insbesondere in Fig. 2, dargestellte Wegstreckenzähler besteht aus auf einer Zählerachse 1 drehbar gelagerten Zahlenrolle 2, 2'. Die Zahlenrollen 2, 2' sind auf ihrem zylindrischen Umfang gleichmässig verteilt mit den Ziffern 0-9 beschriftet. Dabei sind die Ziffern der Zahlenrolle 2, 2' nebeneinanderliegend jeweils in einer Reihe. Eine Reihe dieser Ziffern ist durch ein Sichtfenster einer nicht dargestellten zwischen einem Beobachter und dem Wegstreckenzähler angeordneten Abdeckung sichtbar. Durch einen Antrieb 3 sind die Zahlenrollen 2, 2' derart drehbar antreibbar, dass in der Reihenfolge von rechts nach links bei Beendigung einer Umdrehung einer Zahlenrolle 2 die danebenliegende Zahlenrolle 2, 2' um eine 9/10-Umdrehung gedreht wird.

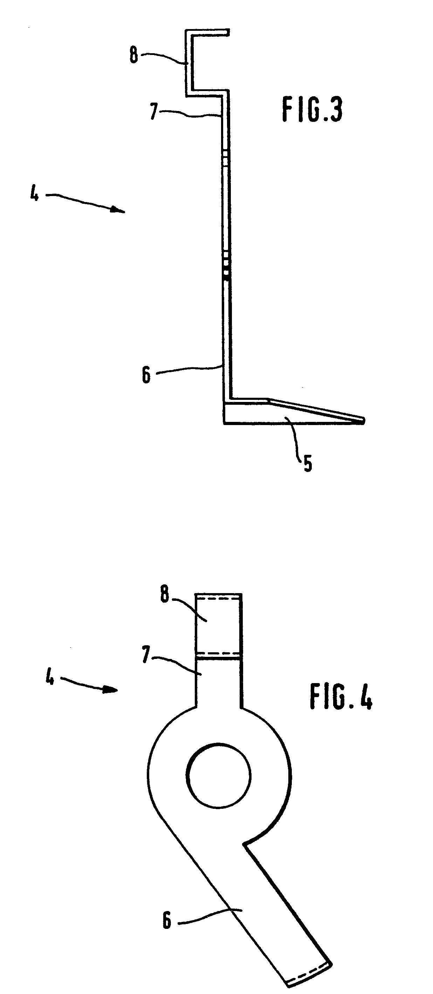

Wie in Fig. 1 zu sehen ist, ist an der äusseren linken Zahlenrolle 2' ein in den Fig. 3 und 4 als Einzelteil dargestellter Federarm 4 mit einer Anzeigefahne 5 angeordnet. Der Federarm 4 ist auf der Zählerachse 1 drehbar gelagert und weist zwei radial wegragende Arme 6 und 7 auf. Das freie Ende des Armes 6 ist abgewinkelt und ragt axial in den mit den Ziffern beschrifteten Bereich der Zahlenrolle 2'. Dieses freie Ende, das auch farbig angelegt sein kann, bildet die Anzeigefahne 5.

Das freie Ende des Armes 7 ist als U-förmige Abbiegung 8 ausgebildet und steht axial aus der Ebene des Federarmes 4 hervor.

In der Normallage, in der die Abbiegung 8 mit durchgezogenem Strich gezeichnet ist, ist die Abbiegung 8 an einer parallel neben der Zahlenrolle 2' angeordneten feststehenden Wand 9 abgestützt und ragt in eine Ausnehmung 10 in der Stirnwand der Zahlenrolle 2' hinein. Da die Ausnehmung 10 in Umfangsrichtung durch die Stege 11 begrenzt ist, ist in dieser Normallage der Federarm 4 drehfest mit der Zahlenrolle 2' verbunden.

Hat die Zahlenrolle 2' eine volle Umdrehung gemacht, so erreicht die Abbiegung 8 des sich mit der Zahlenrolle 2' drehenden Federarmes 4 eine Ausnehmung 11 in der drehfesten Wand 9 und rastet, da sie vorher unter Vorspannung in die Ausnehmung 10 ragend abgebogen war, in die Ausnehmung 11 ein. In dieser Stellung ist die Abbiegung 8 durch eine unterbrochene Linie dargestellt.

Durch das Einrasten der Abbiegung 8 in die Ausnehmung 11, wird die drehfeste Verbindung zwischen Zahlenrolle 2' und Federarm 4 gelöst. Gleichzeitig ist der Federarm 4 durch seine in die Ausnehmung 11 eingerastete Abbiegung 8 drehfest mit der Wand 9 verbunden und bleibt in dieser Lage stehen.

In dieser Lage ragt aber auch die an dem Arm 6 angeordnete Anzeigefahne 5 in den durch das Sichtfenster vom Beobachter sichtbaren Bereich der Zahlenrolle 2, 2' und zeigt damit an, dass alle Zahlenrollen 2, 2' bereits eine volle Umdrehung gemacht haben, also bereits eine Wegstrecke von mehr als hunderttausend Kilometern zurückgelegt wurde.

## Patentansprüche

1. Wegstreckenzähler mit einer Zählerachse (1), auf der nebeneinander Zahlenrollen (2, 2') drehbar gleagert sind, die auf ihrem zylindrischen Umfang gleichmässig verteilt mit den Ziffern 0-9 beschriftet sind, wobei eine Reihe der nebeneinanderliegenden Ziffern in einem Sichtfenster sichtbar ist, mit einem Antrieb der Zahlenrollen (2, 2'), durch den in der Reihenfolge von rechts nach links bei Beendigung einer Umdrehung einer Zahlenrolle die danebenliegende Zahlenrolle um eine 9/10-Umdrehung gedreht wird und mit einer durch eine ausgewählte Zahlenrolle (2') bei Erreichen einer bestimmten Anzeigeposition betätigbaren Anzeigeeinrichtung mit einer Anzeigefahne, die mit der ausgewählten Zahlenrolle (2') zusammengekuppelt und bei Erreichen der bestimmten Anzeigeposition in den Bereich des Sichtfensters bewegbar, von der ausgewählten Zahlenrolle (2') abkuppelbar und in dieser Position arretierbar ist, dadurch gekennzeichnet, dass die Anzeigefahne (5) einen Federarm (4) aufweist, der unter Vorspannung axial in eine Ausnehmung (10) an der Stirnseite der ausgewählten Zahlenrolle (2') hineinragt, und der bei Erreichen der bestimmten Anzeigeposition sich entspannend axial aus dem Bereich der ausgewählten Zahlenrolle (2') in den Bereich einer zur Stirnseite der ausgewählten Zahlenrolle (2') befindlichen Ausnehmung (11) bewegt.

2. Wegstreckenzähler nach Anspruch 1, dadurch gekennzeichnet, dass der Federarm (4) an einer zur Stirnseite der ausgewählten Zahlenrolle (2') parallelen Wand (9) abstützbar ist.

3. Wegstreckenzähler nach einem der vorhergehenden Ansprüche, dadurch gekennzeichnet, dass der Federarm (4) drehbar auf der Zählerachse (1) gelagert und mit zwei von der Zählerachse (1) radial wegragenden Armen (6 und 7) ausgebildet ist, wobei an dem freien Ende des einen Armes (6) die Anzeigefahne (5) angeordnet ist und das freie Ende des anderen Armes (7) in die Ausnehmung (10) der ausgewählten Zahlenrolle (2') hineinragt.

4. Wegstreckenzähler nach Anspruch 3, dadurch gekennzeichnet, dass das in die Ausnehmung (10) der ausgewählten Zahlenrolle (2') hineinragende Ende des Armes (7) eine axial gerichtete Abbiegung (8) besitzt, die bei vorgespanntem Federarm (4) in die Ausnehmung (10) der ausgewählten Zahlenrolle (2') und bei entspanntem Federarm (4) in eine axiale Ausnehmung (11) der Wand (9) hineinragt.

5. Wegstreckenzähler nach Anspruch 4, dadurch gekennzeichnet, dass die Abbiegung (8) U-förmig ist.

6. Wegstreckenzähler nach einem der vorhergehenden Ansprüche, dadurch gekennzeichnet, dass die Anzeigefahne (5) durch das abgewinkelte, axial in den Bereich des Sichtfensters ragende, freie Ende des Armes (6) gebildet ist.

7. Wegstreckenzähler nach einem der vorhergehenden Ansprüche, dadurch gekennzeichnet, dass die Anzeigefahne (5) der linken äusseren Zahlenrolle (2') zugeordnet ist.

## Revendications

1. Odomètre comprenant: un axe compteur (1), sur lequel sont montés côte à côte et peuvent tourner des disques chiffrés (2, 2'), sur la périphérie cylindrique desquels sont inscrits à distance régulière les chiffres 0-9, une rangée de chiffres adjacents étant visible à travers un voyant; un mécanisme d'entraînement de ces disques (2, 2'), grâce auquel, de droite à gauche successivement, lorsqu'un disque a exécuté un tour complet, le disque adjacent est entraîné de 9/10 de tour; et un dispositif indicateur à talon qui peut être actionné par un disque (2') choisi lorsque celui-ci arrive à une position d'indication déterminée, qui est accouplé à ce disque (2') choisi et qui, lorsque cette position déterminée est atteinte, peut être amené dans la zone du voyant, être dégagé dudit disque choisi et être immobilisé dans cette position, odomètre caractérisé en ce que le talon indicateur (5) comporte un bras élastique (4) qui pénètre axialement, lorsqu'il est soumis à une contrainte préalable, dans un évidement (10) du flanc du disque choisi (2') et qui, lorsque la position d'indication est atteinte, passe axialement en se détendant de ce disque choisi (2') dans un évidement (11) adjacent à ce flanc du disque choisi (2').

2. Odomètre selon la revendication 1, caractérisé en ce que le bras élastique (4) peut s'appuyer contre une paroi (9) parallèle au flanc du disque choisi (2').

3. Odomètre selon l'une des revendications précédentes, caractérisé en ce que le bras élastique (4) est monté et peut tourner sur l'axe compteur (1) et est formé de deux bras (6 et 7) qui font saillie radialement de cet axe (1), le talon indicateur (5) étant disposé à l'extrémité libre de l'un des bras (6) et l'extrémité libre de l'autre bras (7) pénétrant dans l'évidement (10) du disque choisi (2').

4. Odomètre selon la revendication 3, caractérisé en ce que l'extrémité libre du bras (7), qui pénètre dans l'évidement (10) du disque choisi (2'), comporte un repli axial (8) qui, lorsque le bras élastique (4) est soumis à une contrainte préalable, pénètre dans cet évidement (10) du disque choisi (2') et qui, lorsque ce bras élastique (4) est détendu, pénètre dans un évidement axial (11) de la paroi (9).

5. Odomètre selon la revendication 4, caractérisé en ce que le repli (8) forme un U.

6. Odomètre selon l'une des revendications précédentes, caractérisé en ce que le talon indicateur (5) est formé par l'extrémité libre du bras (6), qui est coudée et fait saillie axialement dans la zone du voyant.

7. Odomètre selon l'une quelconque des revendications précédentes, caractérisé en ce que le talon indicateur (5) coopère avec le disque chiffré (2') extérieur de gauche.

## Claims

1. Odometer, having a meter-shaft (1) whereon number-wheels (2, 2') are rotatably mounted side by side, these being inscribed with the digits 0-9 distributed uniformly at the cylindrical peripheries of said wheels, a series of digits adjacent one another being visible in a viewing window, with a drive for the number-wheels (2, 2') by which drive in sequence from right to left when a revolution of one number-wheel is ended the adjacent number-wheel is turned through a 9/10 revolution, and with an indicating arrangement operatable by a selected number-wheel (2') on attainment of a specific indication position, having an indicating tab which is connected to the selected number-wheel (2') and on attainment of the specific indication position is adapted to move into the region of the viewing window, to be uncoupled from the selected number-wheel (2') and to be arrested in this position, characterised in that the indicating tab (5) comprises a spring-arm (4) which projects with preload axially into a recess (10) on the end face of the selected number-wheel (2') and which on attainment of the specific indication position moves, relaxing from preload, axially out of the region of the selected number-wheel (2') into the region of a recess (11) which is situated at the end face of the selected number-wheel (2').

2. Odometer according to claim 1, characterised in that the spring-arm (4) is adapted to be supported on a wall (9) which is parallel to the end face of the selected number-wheel (2').

3. Odometer according to one of the preceding claims, characterised in that the spring-arm (4) is mounted rotatably on the meter-shaft (1) and is constructed with two arms (6 and 7) projecting radially from the meter-shaft (1), the indicating tab (5) being situated on the free end of one arm (6), and the free end of the other arm (7) projecting into the recess (10) of the selected number-wheel (2').

4. Odometer according to claim 3, characterised in that the end of the arm (7) which projects into the recess (10) of the selected number-wheel (2') has an axially directed bent-over portion (8) which, when the spring-arm (4) is preloaded, projects into the recess (10) of the selected number-wheel (2') and, when the spring-arm (4) is relaxed, projects into an axial recess (11) of the wall (9).

5. Odometer according to claim 4, characterised in that the bent-over portion (8) is U-shaped.

6. Odometer according to one of the preceding claims, characterised in that the indicating tab (5) is formed by the angled-over free end of the arm (6), which end projects axially into the region of the viewing window.

7. Odometer according to one of the preceding claims, characterised in that the indicating tab (5) is associated with the left outer number-wheel (2').

FIG.1

FIG. 2

8

7

FIG.3

4

6

5

8

7

4

FIG.4

6